# EUROPEAN PATENT APPLICATION

(11) **EP 3 650 150 A1**
(43) Date of publication of application: **13.05.2020**
(21) Application number: 18205406.4
(22) Date of filing: 09.11.2018
(51) Int. Cl.: B23B 27/16

(54) **A TOOL FOR CHIP REMOVING MACHINING AND A KIT FOR A TOOL FOR CHIP REMOVING MACHINING**

(71) Applicant: WALTER AG, 72072 Tübingen (DE)
(72) Inventor: BÜRKLE, Hubert, 72119 Ammerbuch (DE); LÖFFLER, Markus, 72800 Eningen unter Achalm (DE); WÜTZ, Michael, 72072 Tübingen (DE)
(74) Representative: Sandvik

(57) **Abstract**

The present disclosure relates to a tool (1) for chip removing machining comprising a tool body (2). The tool body includes at least one insert seat (3) for accommodating a cutting insert (5) having a top surface (6) and a bottom surface (7). The tool body (2) is configured for securing the cutting insert (5) in the insert seat (3) by an attachment member (27, 30), and the insert seat (3) has a bottom surface (4) and at least one side surface (13, 14). The tool (1) comprises further at least one assembling aid (8), e.g. in the form of a metallic spring clip (8), which is provided at least at one insert seat (3) and which includes a clamping section (9) and a mounting section (10). The clamping section (9) extends above the bottom surface (4) of the insert seat (3) for, when the cutting insert (5) is accommodated in the insert seat (3), engaging the top surface (6) of the cutting insert (5). The clamping section (9) is biased towards the bottom surface (4) of the insert seat (3) and the mounting section (10) is attached to the tool body (2). The present disclosure also relates to a kit comprising a shim and an assembling aid.

## Description

### TECHNICAL FIELD

The present disclosure relates to a tool for chip removing machining comprising a tool body, the tool body including at least one insert seat for accommodating a cutting insert having a top surface and a bottom surface, wherein the tool body is configured for securing the cutting insert in the insert seat by an attachment member, and wherein the insert seat has a bottom surface and at least one side surface.

Tools for chip removing machining, wherein the chips are cut by geometrically defined edges, i.e. cutting edges, are frequently used in machining of metal workpieces. Possible chip removing machining operations in this sense are drilling, turning, milling, thread cutting and others.

For many applications the tool for chip removing machining is a multi-component tool comprising a tool body having an insert seat and a cutting insert mounted in the insert seat. By providing a multi-component tool the cutting edge, which is used for the chip removing machining operation, can be replaced once a considerable wear of the cutting edge has occurred.

In order to replace the cutting edge, the entire cutting insert can be replaced, or, if the cutting insert including the cutting edge is a so called indexable insert, the cutting insert can be turned around to bring another edge of the insert into an active cutting position.

Replacing or indexing a cutting insert is in many applications carried out when the tool body is mounted at the machine tool. However, when mounting a cutting insert at a tool body with the tool body remaining in the machine tool, the position of the insert seat for accommodating the cutting insert is often determined by the machine tool. This may lead to cases where the cutting insert has to be mounted with the insert seat in an upside down position. This requires a very skilled operator being able not only to position the cutting insert with the fingers of his hands, but to simultaneously fasten an attachment member for permanently fixing the cutting insert on the insert seat. It is apparent, that this operation is particularly complicated when the insert seat is not easily accessible in the machine tool.

### SUMMARY

Consequently, it is an objective of the present disclosure to provide a tool for chip removing machining facilitating mounting of a cutting insert at the tool body of the tool.

Under a first aspect this objective is addressed by a tool for chip removing machining comprising a tool body, the tool body including at least one insert seat for accommodating a cutting insert having a top surface and a bottom surface, wherein the tool body is configured for securing the cutting insert in the insert seat by an attachment member, and wherein the insert seat has a bottom surface and at least one side surface, wherein the tool further comprises at least one assembling aid, which is provided at least at one insert seat and which includes a clamping section and a mounting section, wherein the clamping section extends above the bottom surface of the insert seat for, when the cutting insert is accommodated in the insert seat, engaging the top surface of the cutting insert, the clamping section is biased towards the bottom surface of the insert seat, and wherein the mounting section is attached to the tool body.

By providing an assembling aid at an insert seat, a cutting insert can be preliminarily positioned in the insert seat and is held in place until the cutting insert is fixed by an attachment member. Due to the clamping section of the assembling aid extending above the bottom surface of the insert seat, the assembling aid allows a facilitated mounting of the cutting insert even in an upside-down position of the insert seat. The cutting insert is prevented from falling down after being placed in the insert seat and before being fixed by tightening the attachment member.

The insert seat of the tool body is suitable for, or in other words, configured to, accommodating a cutting insert. In embodiments, the tool comprises a cutting insert, which is mounted in the insert seat. In embodiments, the bottom surface of the insert seat is in contact with the bottom surface of the cutting insert.

In embodiments of the present disclosure, the tool comprises a cutting insert and the cutting insert is mounted in the insert seat. In embodiments, the tool comprises a cutting insert and an attachment member. The cutting insert is securable in the insert seat by the attachment member.

In an embodiment of the present disclosure, the tool body, at least at one of the insert seats, comprises a receptacle for receiving a part of an attachment member for securing a cutting insert in the insert seat. The receptacle may for example be a threaded hole or a T-slot for receiving a corresponding part of an attachment member.

In an embodiment of the present disclosure, the tool comprises an attachment member received at the tool holder, which attachment member is arranged for securing a cutting insert in the insert seat. In an embodiment the attachment member is received in a receptacle of the tool holder.

In an embodiment the attachment member is a screw or a clamp.

The assembling aid is a separate element from the receptacle and/or the attachment member.

The tool for chip removing machining is a cutting tool, such as a turning tool, boring tool, milling tool or drilling tool.

Due to the clamping section of the assembling aid being biased towards the bottom surface, a pressing force in the direction towards the bottom surface of the insert seat is provided. When the cutting insert is accommodated in the insert seat, the assembling aid presses the cutting insert onto the bottom surface of the insert seat.

In an embodiment of the present disclosure, the tool body comprises tool steel as a material for the tool body.

In embodiments, the clamping section and/or the mounting section of the assembling aid comprises an elastic material, which is elastically or resiliently deformable. In embodiments, all sections of the assembling aid comprise the elastic material. The elastic material can be metal, for example spring steel.

In an embodiment, the clamping section consists of the elastic material. Thereby, the clamping section itself provides the bias towards the bottom surface. The clamping section may be bent away from the bottom surface by the cutting insert when the cutting insert is placed in the insert seat, wherein the clamping section is elastically deformed, and the elastic force of the deformed clamping section presses the cutting insert onto the bottom surface of the insert seat.

In an embodiment, other parts of the assembling aid than the clamping section comprise or consist of an elastic material. In such embodiments, if the clamping section is bent away from the bottom surface by the cutting insert, the clamping section flexes around another part of the assembling aid. In embodiments, the clamping section is ridged and essentially not deformed.

The assembling aid may comprise bent metal wire or a bent elongated strip of sheet metal, for example of spring steel. The assembling aid may be one integral part of bent wire or metal strip, or, may comprise pieces of wire or meatal strip attached to each other. The clamping section and the mounting section may constitute different sections of the bent wire or metal strip.

In an embodiment, the clamping section, in a cross-section in a plane perpendicular to the bottom surface of the insert seat, is convex towards the bottom surface of the insert seat. Due to this convex shape, the clamping section, which extends over the bottom surface of the insert seat, has portions at its ends that are further away from the bottom surface of the insert seat than a portion in between these ends. Thus, a cutting insert can easily be guided in under the clamping section of the assembling aid from one of these ends by sliding the cutting insert either on the bottom surface of the insert seat or on a top surface of a shim received on the bottom surface of the insert seat.

Consequently, in an embodiment of the present disclosure, the clamping section comprises an inclined insertion surface facing the bottom surface of the insert seat. Between the bottom surface of the insert seat and the inclined surface of the clamping section of the assembling aid a wedge-shaped space is formed for receiving the cutting insert.

The assembling aid according to the present disclosure may have numerous overall shapes. Some particular shapes of the assembling aid will be discussed in detail below.

At least in an embodiment of the present disclosure, a first end of the mounting section adjoins the clamping section, wherein a second end of the mounting section is fixed to the tool body.

According to an embodiment of the present disclosure, the clamping section and the mounting section are not bent with respect to each other, but rather have an I-shape or straight shape. In this way, the assembling aid can be mounted on a surface of the tool body surrounding the insert seat.

According to another embodiment of the present disclosure, at least a first part of the mounting section and the clamping section are bent to an L-shape, wherein the first part of the mounting section and the clamping section define the legs of the L-shape.

The L-shape allows the mounting section of the assembling aid to be mounted at the tool body in the insert seat such that at least the first part of the mounting section and the clamping section, when a cutting insert is accommodated in the insert seat, adjoin two different surfaces of the cutting insert.

In an embodiment, wherein at least the first part of the mounting section and the clamping section are bent to an L-shape, at least the first part of the mounting section extends in a direction essentially perpendicular to the bottom surface. In some embodiments the entire mounting section extends in a direction essentially perpendicular to the bottom surface of the insert seat.

In an embodiment, the L-shape of the clamping section and the mounting section leads to the entire assembling aid having an L-shape. In this case the mounting section is I-shaped. In an embodiment, a second end of the mounting section is received in a recess in the bottom surface of the insert seat.

In an embodiment, wherein the overall shape of the assembling aid is an I-shape, the assembling aid has a first mounting section and a second mounting section each being fixed to the tool body, wherein the clamping section extends between the first mounting section and the second mounting section. In this embodiment the clamping section can be described as a bridge over the insert seat.

In further embodiments, the overall shape of the assembling aid is a Z-shape or a U-shape. In these embodiments, a mounting section has a first part and a second part, wherein the first part and the second part are bent to an L-shape. The first part and the second part define the legs of the L-shape. The overall shape of the assembling aid will then be either Z-shaped or U-shaped depending on in which direction the second part of the mounting section extends as compared to the extension of the clamping section.

In an embodiment, a second end of the mounting section is fixed in a complementary recess formed in the tool body. Depending on the exact overall shape of the assembling aid, the recess may have different shapes and may be located in different positions at the tool body, and in particular, in the insert seat.

In an embodiment of the present disclosure, the recess is a hole and an end of the second part of the mounting section is received in the hole. In an embodiment of the present disclosure the hole may have a circular cross-section, but, in another embodiment, an elongated cross-section of the hole may be preferred.

In an embodiment where the overall shape of the assembling aid is L-shaped, the hole is located in the bottom surface of the insert seat. In an embodiment where the overall shape of the assembling aid is Z-shaped, the hole may be located in at least one side surface of the insert seat.

In an embodiment of the present disclosure, an end of the second part of the mounting section is glued, welded or press-fitted into the recess, in particular, into the hole.

As outlined above, in an embodiment of the present disclosure, the general overall shape of the assembling aid is U-shaped. The tool further comprises a shim mounted on the bottom surface of the insert seat and a groove is provided in the bottom surface of the insert seat, wherein a part of the groove extends below the shim. In such an embodiment with a U-shaped assembling aid, shim and groove, the second part of the mounting section is received in the groove. In this embodiment the groove provides the recess in the sense of the present disclosure. It is advantageous that in this embodiment the assembling aid can easily be clamped in the groove by tightening the shim on the bottom surface of the insert seat.

The desired clamping of the assembling aid in the groove can be provided in other ways. For example, in an embodiment of the present disclosure, the second part of the mounting section has a curved portion so that the second part of the mounting section has a relaxed state and a clamped state. The second part of the mounting section is in the relaxed state when the second part of the mounting section is received in the groove before the shim is mounted, and in the clamped state when the second part of the mounting section is received in the groove and the shim is mounted. In the relaxed state at least a part of the curved portion projects from the groove, and in the clamped state the curved portion is resiliently pressed into the groove by the shim. In this embodiment of the present disclosure, there is no need to glue or weld the mounting section into the recess, but the shim loose-proofly mounts the assembling aid in the insert seat.

The same principle of clamping an U-shaped assembling aid in a groove by the shim, which is accommodated in the insert seat, can be applied in an embodiment, wherein the tool comprises a shim mounted on the bottom surface on the insert seat, but wherein the groove instead is provided in a bottom surface of the shim, and wherein the second part of the mounting section is received in the groove. This embodiment is advantageous as it does not require any additional machining of the tool body, but instead relies on a groove in the shim which is a part separate from the tool body.

Consequently, according to another aspect of the present disclosure, the above objective is also addressed by a kit for a tool for chip removing machining, which tool comprises a tool body including at least one insert seat for accommodating a cutting insert having a top surface and a bottom surface, wherein the kit is configured for being mounted in the insert seat. The kit comprises a shim having a bottom surface and a top surface. The shim is suitable for being mounted on a bottom surface of an insert seat, wherein the shim has a bottom surface, a top surface and a groove provided in the bottom surface. The kit further comprises an assembling aid comprising a clamping section and a mounting section, which together form a U-shaped element having two legs and an interconnecting member. The mounting section has a first part and a second part. The first part of the mounting section and the clamping section are bent so that the first part forms the interconnecting member and the clamping section forms one of the legs. The first part of the mounting section and the second part of the mounting section are bent so that the second part forms the other one of the legs. The second part of the mounting section is received in the groove so that the clamping section extends above the top surface of the shim for, when a cutting insert is mounted in the insert seat, engaging a top surface of the cutting insert. The clamping section is elastically deformable in a direction perpendicular to the top surface of the shim and away from the top surface of the shim. This enables a retrofit for existing tools without any machining of the tool body being required.

It shall be pointed out that neither the tool body nor the cutting insert are part of the kit. In an embodiment, the kit consists of the shim and the assembling aid.

In an embodiment of the kit, the second part of the mounting section has a material thickness smaller than or equal to a depth of the groove in a direction perpendicular to the bottom surface of the shim. The second part of the mounting section has a curvature so that, when the shim is unmounted, a section of the second part of the mounting sections projects from the groove and beyond the bottom surface of the shim. Furthermore, the second part of the mounting section is elastically deformable by the shim, when the shim is mounted on the bottom surface of an insert seat for clamping the second part of the mounting section between the bottom surface of the insert seat and the shim. In an embodiment, wherein the assembling aid comprises a wire, the material thickness of the mounting section is the diameter of the wire. In an embodiment, wherein the assembling aid comprises an elongated strip of sheet metal, the material thickness is the thickness of the planar sheet metal before bending and shaping.

Where applicable, embodiments described herein, not only refer to the kit, but also to the tool according to the present disclosure.

In embodiments, the assembling aid can be mounted in the insert seat without interfering with the cutting insert accommodated in the insert seat. Especially, in embodiments where the overall shape of the assembling aid is an L-shape, a U-shape or a Z-shape, a space can be provided in the insert seat to accommodate at least the first part of the mounting section.

Consequently, in an embodiment of the present disclosure, at least one side surface of the insert seat comprises an abutment surface section, wherein the abutment surface section comprises a groove extending in a direction perpendicular to the bottom surface of the insert seat, wherein the first part of the mounting section is received in the groove.

In an embodiment of the present disclosure, the insert seat has a first side surface and a second side surface forming an angle there between, wherein the first and second side surfaces are configured to support complementary side surfaces of a cutting insert. The insert seat includes a relief in a corner area, which is formed between the first side surface and the second side surface, for accommodating a cutting corner, especially an inactive cutting corner, of the cutting insert. At least the first part of the mounting section of the assembling aid is received in the relief.

In a further embodiment of the present disclosure, the assembling aid itself comprises a relief for avoiding contact with a cutting edge, for example at a corner, of the cutting insert. In an embodiment the relief is provided at least in the first part of the mounting section.

In an embodiment, wherein the assembling aid comprises a bent strip of sheet metal, the relief in the first part of the mounting section is formed by a slit in the first part.

In an embodiment, wherein the assembling aid comprises a bent wire, the assembling aid comprises two sections of bent wire extending next to each other. The bent wire can be formed as an open loop, wherein the two sections of bent wire are interconnected at one end, for example at the end of the clamping section, so that they form one integral part. The relief in the first part of the mounting section can be formed by bending the two sections of wire apart an appropriate distance.

In an embodiment of the present disclosure, wherein the tool further comprises a cutting insert, the cutting insert is mounted in the insert seat and has a thickness in a direction perpendicular to the bottom surface of the insert seat. A spacing between the clamping section and a supporting surface for the bottom surface of the cutting insert, in a relaxed state of the clamping section, is smaller than the thickness of the cutting insert.

### BRIEF DECSRIPTION OF THE FIGURES

Further advantages, features and applications of the present disclosure will become apparent from the following description of embodiments and the corresponding figures attached. The foregoing as well as the following detailed description of embodiments of the present disclosure will be better understood when read in conjunction with the appended drawings. It should be understood that the depicted embodiments are not limited to precise arrangements and instrumentalities shown. Unless otherwise indicated, like reference numerals refer to like or corresponding parts in different figures.
- Figure 1: is a cross-sectional view of a tool according to a first embodiment of the present disclosure with a tool body, a shim, a cutting insert as well as an assembling aid.
- Figure 2: is a broken away isometric view of the tool body of figure 1.
- Figure 3: is an isometric view of the assembling aid of figure 1.
- Figure 4: is an isometric view of the tool body and the assembling aid of figures 1 to 3.
- Figure 5: is an isometric view of the tool of figure 1.
- Figure 6: is an isometric view of an alternative embodiment of an assembling aid according to the present disclosure.
- Figure 7: is a broken away isometric view of a tool according to an embodiment of the present disclosure with the assembling aid of figure 6.
- Figure 8: is a broken away cross-sectional view of a tool according to an embodiment of the present disclosure with a clamp securing the cutting insert.
- Figure 9: is a broken away cross-sectional view of an alternative embodiment of a tool according to the present disclosure with a screw securing the cutting insert.
- Figure 10: is a broken away cross-sectional view of an embodiment of a tool according to the present disclosure with a shim, a cutting insert and an assembling aid.
- Figure 11: is an isometric top view of an embodiment of a kit according to the present disclosure with a shim and the assembling aid of figure 3.
- Figure 12: is a bottom isometric view of the kit of figure 11, wherein the shim and the assembling aid are separated.
- Figure 13: is an isometric view of another embodiment of an assembling aid according to the present disclosure.
- Figure 14: is an isometric view of another embodiment of an assembling aid according to the present disclosure.
- Figure 15: is a broken away cross-sectional view of an embodiment of a tool according to the present disclosure with an assembling aid according to figure 14.
- Figure 16: is a broken away isometric view of an embodiment of a tool according to the present disclosure with the assembling aid of figure 13.
- Figure 17: is an isometric view of another embodiment of an assembling aid according to the present disclosure.
- Figure 18: is an isometric view of another embodiment of an assembling aid according to the present disclosure.
- Figure 19: is a broken away cross-sectional view of a tool according to the present disclosure with the assembling aid of figure 18.
- Figure 20: is a broken away cross-sectional view of another embodiment of a tool according to the present disclosure.
- Figure 21: is a broken away isometric view of the tool of figure 20.

### DETAILED DESCRIPTION

It is the general concept of the present disclosure to provide a tool 1 allowing a facilitated mounting of a cutting insert 5 at a tool body 2. The cutting insert 5 can be handled with a single hand and the correct positioning of the cutting insert ca be achieved. Furthermore, mounting is enabled even in an upside down position of the insert seat 3 without the risk of the cutting insert 5 falling down.

According to the present disclosure this is achieved by providing the insert seat 3 with an assembling aid 8.

In the figures, the tools 1 are turning tools. However, the concept of an assembling aid 8 at an insert seat 3 can be applied to other types of tools, for example boring tools, milling tools or drilling tools. In the figures, the cutting insert 5 is a turning insert.

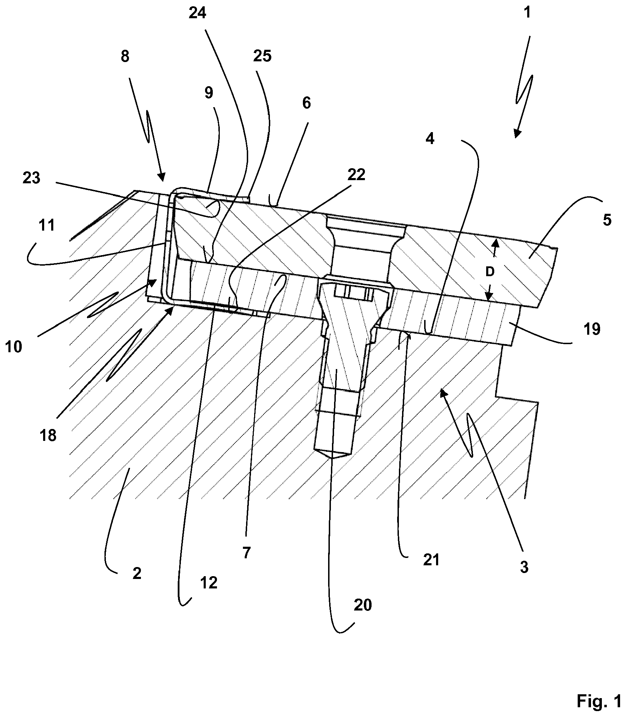

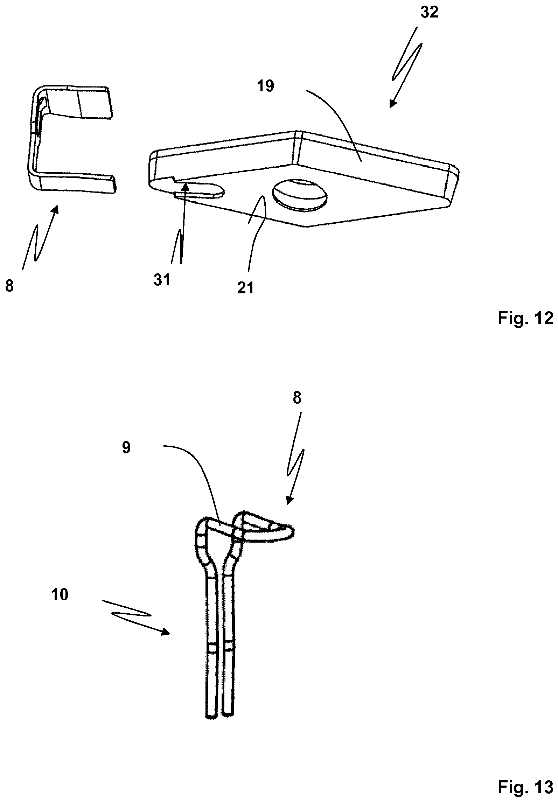

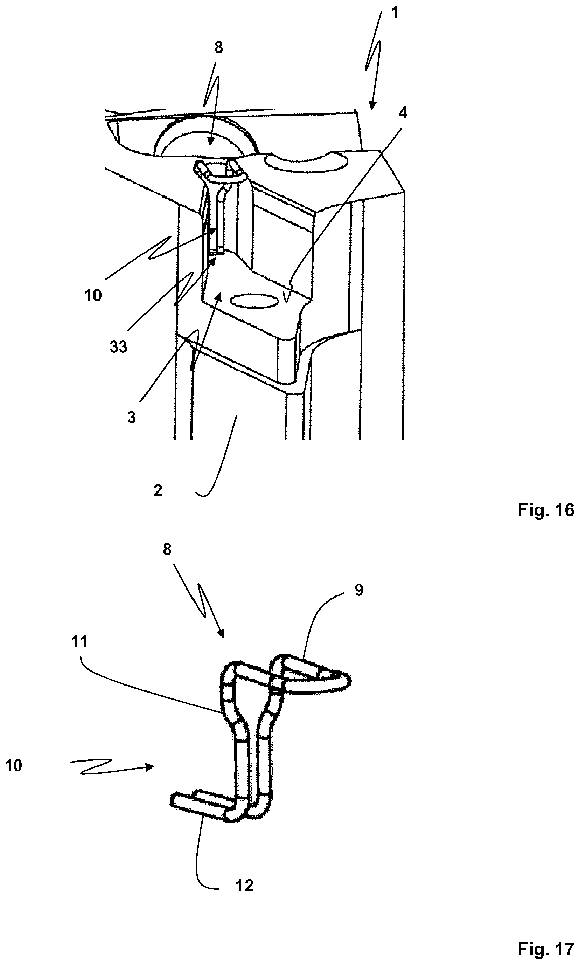

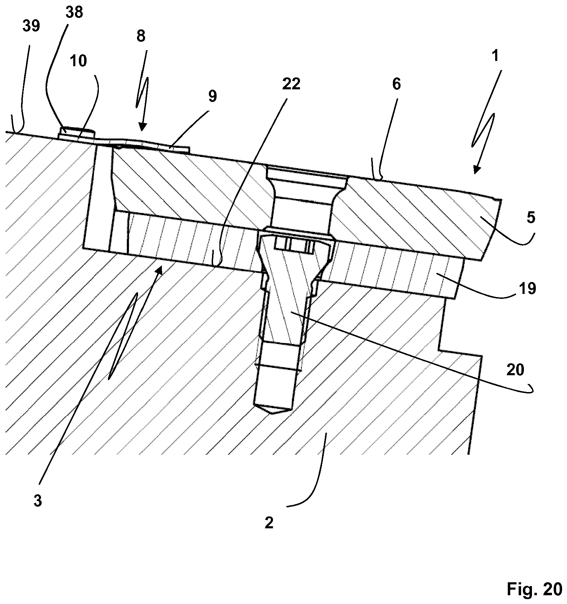

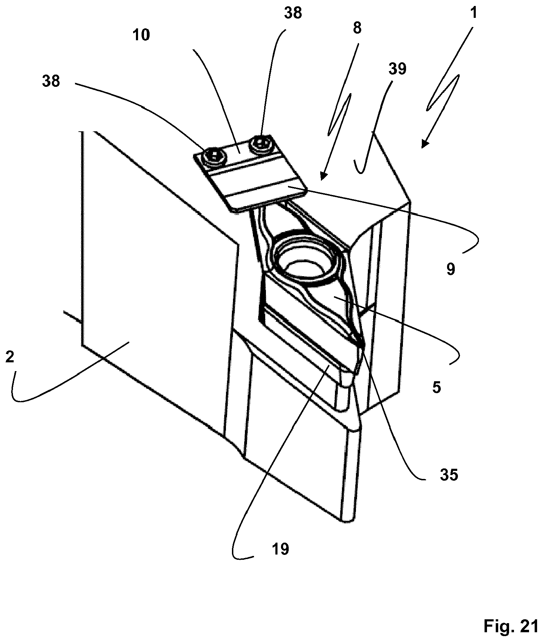

According to the example embodiments of the present disclosure shown in the figures, the assembling aid 8 is either U-shaped (see figures 1 to 12), L-shaped (see figures 13 to 16), Z-shaped (see figures 17 to 19) or I-shaped (see figures 20 and 21). In the following those different shapes of an assembling aid 8 as well as the corresponding shapes of the tool body 2 and other parts of the tool 1 will be discussed.

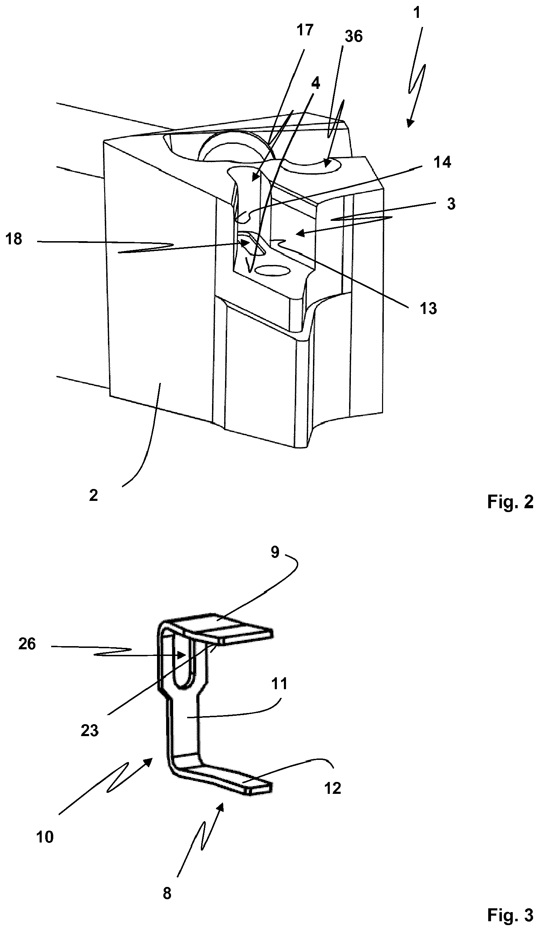

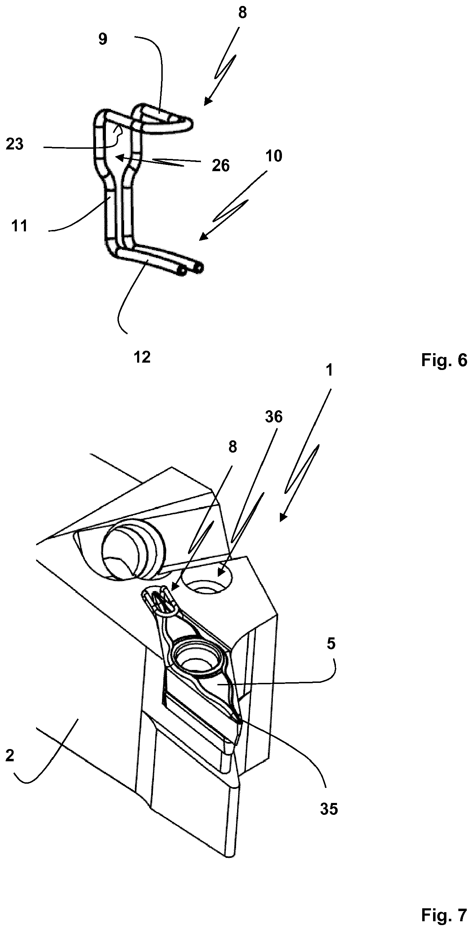

Generally, an assembling aid 8 having such shapes can be achieved by bent wire (e.g. see figures 6, 13 and 17) or by bent strips of sheet metal (e.g. see figures 3, 14 and 18). In each case, the wire or the strip is made of spring steel in order to provide the required elasticity or resilience of the assembling aid.

In figure 1, a cross-sectional view of a tool 1 is shown, wherein the assembling aid 8 is U-shaped. The assembling aid 8 is in the embodiment shown in Fig. 3 made of a strip of sheet metal. The assembling aid 8 is mounted in the insert seat 3. The assembling aid 8 comprises a clamping section 9 and a mounting section 10. The mounting section 10 in turn comprises a first part 11 and a second part 12. In order to provide an overall U-shape of the assembling aid 8, the clamping section 9 and the first part 11 of the mounting section 10 are bent to form an L-shape, wherein the clamping section 9 and the first part 11 of the mounting section 10 form the legs of the L-shape. Furthermore, the first part 11 of the mounting section 10 and the second part 12 of the mounting section 10 are bent to form an L-shape, wherein the first part 11 and the second part 12 form the legs of the L-shape. Due to the two bent sections, the overall shape of the assembling aid 8 is a U-shape.

In other words, the clamping section (9) and the mounting section (10) together form a U-shaped element having two legs and an interconnecting member. The clamping section (9) forms one of the legs, the second part (12) forms the other one of the legs, and wherein the first part (11) of the mounting section forms the interconnecting member.

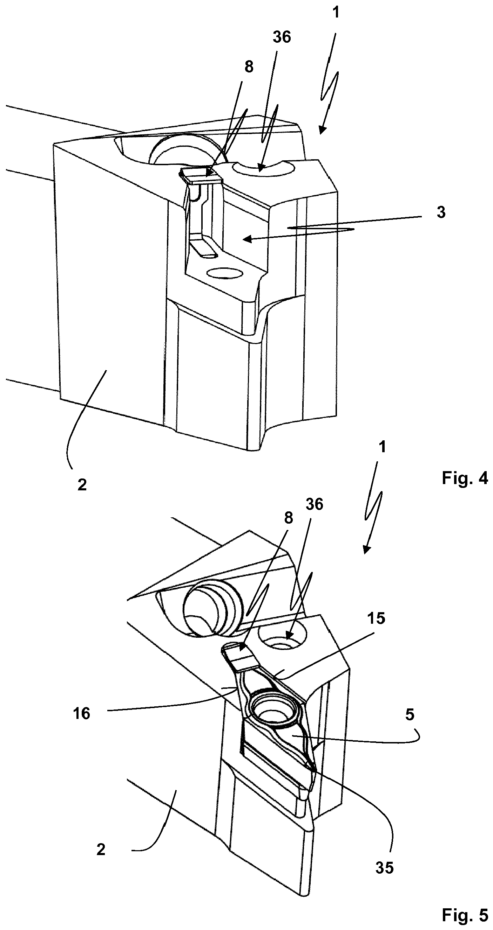

In figures 2 and 4, the design of the insert seat 3 is shown. In figure 2, the tool body 2 without any attached additional components is shown. The insert seat 3 comprises a bottom surface 4 and two side surfaces 13, 14. The two side surfaces 13, 14 form an angle between them for supporting complementary side surfaces 15, 16 of the cutting insert 5. The insert seat 3 further comprises a relief in the corner area 17, which relief is formed between the first side surface 13 and the second side surface 14. The relief at the corner area 17 is provided for accommodating a cutting corner 35 of the cutting insert 5 and for receiving the first section 11 of the mounting section 10 of the assembling aid 8.

In figure 4, the tool of fig 2 is shown with the assembling aid 8 received in the insert seat 3. A groove 18 is provided in the bottom surface 4 of the insert seat 3. The groove 18 serves to receive the second part 12 of the mounting section 10 of the assembling aid 8.

As best understood from figure 3, the second part 12 of the mounting section 10 is bent to have a slight curvature such that the second part 12 of the mounting section 10 is convex towards the shim 19, i.e. away from the bottom surface 4 of the insert seat 3. Consequently, when the second part 12 of the mounting section 10 is received in the groove 18 as depicted in figure 4, the second part 12 of the mounting section 10 protrudes beyond the groove 18. The material thickness of the second part 12 is at maximum as large as the depth of the groove 18. Once the shim 19 is screwed onto the bottom surface 4 of the insert seat 3 by tightening a screw 20 inserted through a hole in the shim, the second part 12 of the mounting section 10 is elastically deformed by the shim. The second part 12 is clamped between the bottom surface 21 of the shim 19 and the bottom surface 22 of the groove 18.

When the shim 19 is fixed to the bottom surface 4 of the insert seat 3, and before the cutting insert 5 is positioned in the insert seat 3, the clamping section 9 of the assembling aid 8 is in its so called relaxed state. In the relaxed state a minimum distance between a bottom surface 23 of the clamping section 9 and a top surface 24 of the shim, which in this embodiment is a supporting surface 24 for the cutting insert 5, is smaller than a thickness D of the cutting insert 5. Both the thickness D of the cutting insert 5 and the minimum distance between the surfaces 23 and 24 are measured in a direction perpendicular to the bottom surface 4 of the insert seat. Thus, when inserting the cutting insert 5 into the insert seat 3, the clamping section 9 is elastically deformed or bent in a direction away from the bottom surface 4. The elastic force of the deformed clamping section 9 presses the cutting insert 5 towards the bottom surface 4 of the insert seat 3. Once the cutting insert 5 is placed below the mounting section 9, the cutting insert 5 can no longer fall out of the insert seat 3.

For enabling insertion of the cutting insert 5 between the clamping section 9 and the top surface 24 of the shim 19, the mounting section 9 is concave towards the bottom surface 4 of the insert seat 3. Due to the concave curvature, the bottom surface 23 of the mounting section 9 has a varying distance to the top surface 24 of the shim 19. In particular, at a tip 25 of the clamping section 9 and in the relaxed state of the clamping section 9, a distance between the bottom surface 23 of the clamping section 9 and the top surface 24 of the shim 19 is larger than the thickness D of the cutting insert 5. Consequently, a tapered space between the top surface 24 of the shim 19 and the bottom surface 23 of the clamping section 9 is formed so that insert the cutting 5 insert can be guided in between the tip 25 and the top surface 24 of the shim 19. Since the minimum distance between the lower surface 23 of the clamping section 9 and the top surface 24 of the shim 19 in the relaxed state of the clamping section 9 is smaller than the thickness D, the cutting insert, when slidingly pushed further into the space between clamping section 9 and the shim 19, elastically deforms or bends the clamping section 9 in a direction away from the bottom surface 4 of the insert seat 3.

It has been described above with reference to figures 2 and 4 that the mounting section 10 of the assembling aid 8 is placed in a relief, in which also an inactive cutting corner 35 of the cutting insert 5 is received. In order not to interfere with the cutting corner 35 and not to damage the cutting corner 35, the assembling aid 8 itself comprises a relief 26. The relief 26 is provided as a slit in the first part 11 of the mounting section 10. The inactive cutting corner 35 reaches into the relief 26 of the assembling aid 8 when the cutting insert 5 is fixedly mounted in the insert seat 3.

In the embodiment described with reference to figures 1 to 5 above, the assembling aid 8 has been manufactured from a sheet metal of spring steel. In an alternative embodiment depicted in figures 6 and 7, the assembling aid 8 has been manufactured from bent wire of spring steel. The design and the functionality of the assembling aid 8 shown in figures 6 and 7 corresponds to the assembling aid 8 of figure 3. Therefore, the same reference numbers have been used to denote corresponding features of the assembling aid 8 in figures 6 and 7.

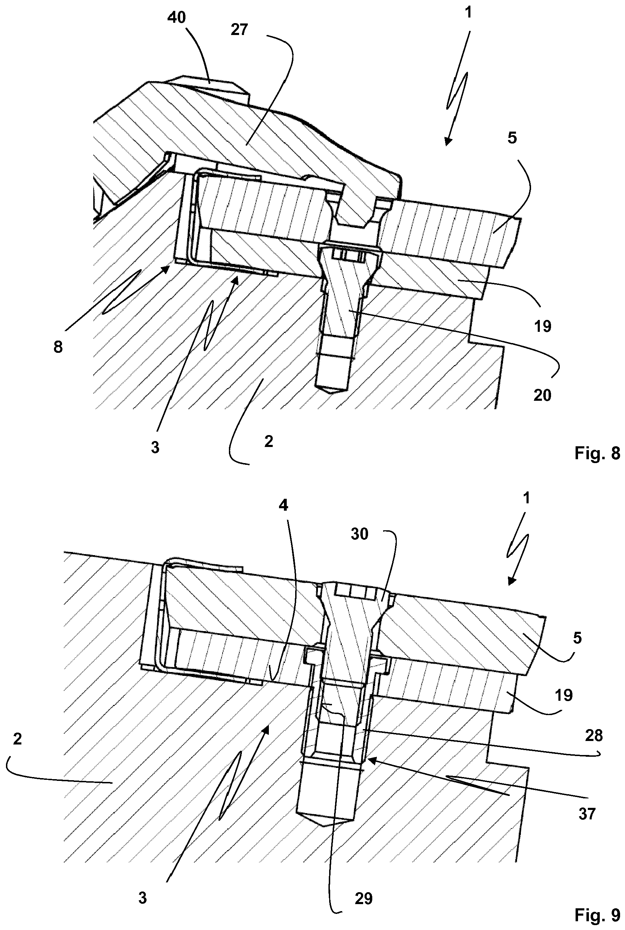

The assembling aid 8 according to the present disclosure only serves to preliminarily hold the cutting insert 5 in the insert seat 3 until the cutting insert 5 is finally mounted in the insert seat 3 of the tool body 2. Consequently, at each insert seat 3 a receptacle for an attachment member for securing the cutting insert 5 in the insert seat 3 is provided. In the embodiments depicted in figures 1 to 7, the receptacle is formed by a threaded hole 36. The threaded hole 36 serves to receive an attachment member. In the embodiment of figure 8 the attachment member comprises a clamp 27 with a screw 40. The clamp 27 clamps the cutting insert 5 on the shim 19 in the insert seat 3.

However, the assembling aid 8 can be used together with other attachment members. In the embodiment according to figure 9, the receptacle for the attachment member is provided by a threaded hole 37 in the bottom surface 4 of the insert seat 3. A hollow screw 28 is screwed into the threaded hole 37 in order to secure the shim 19 on the bottom surface 22. The hollow screw 28 has an inner threading 29, wherein an attachment member in form of a mounting screw 30 is screwed into the inner threading of the hollow screw 28 in order to secure the cutting insert 5 in the insert seat 3.

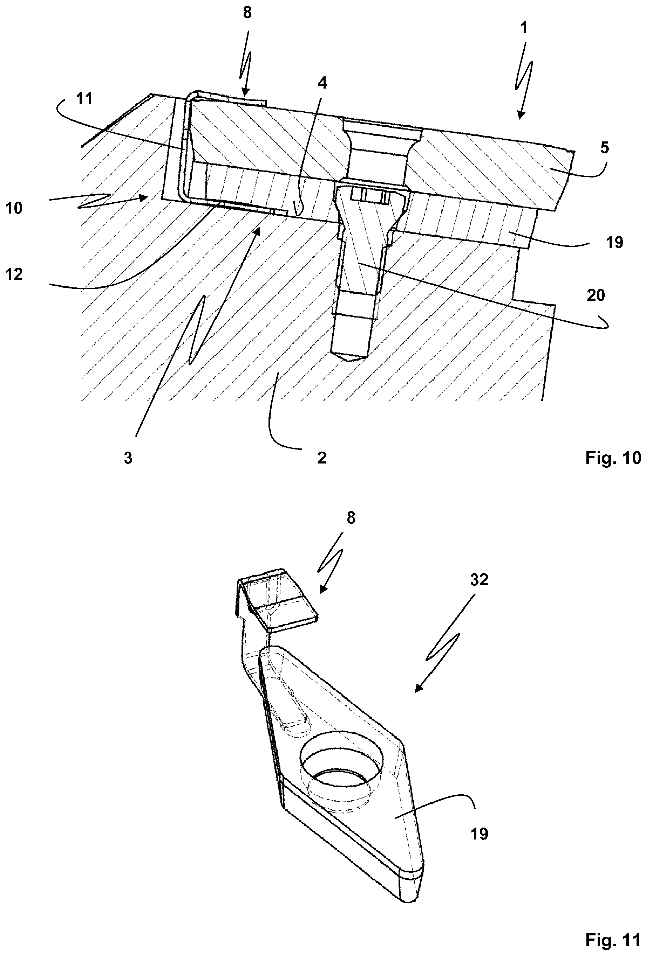

Figures 10 to 12 illustrate a further embodiment of the present disclosure which does not require any additional machining of the insert seat 3. Like in the embodiments described with reference to figures 1 to 9, the assembling aid 8 is clamped between a shim 19 and the bottom surface 4 of the insert seat 3. However, the groove 31 for receiving the second part 12 of the mounting section 10 of the assembling aid 8 is not provided in the bottom surface 4 of the insert seat 3, but is instead provided in the bottom surface 21 of the shim 19. The groove 31 has an open end at a corner portion of the shim for the second part 12 to reach through and connect with the first part 11 of the mounting section 10.

This arrangement is best be understood with reference to figures 11 and 12 showing a kit 32 according to the present disclosure. The kit 32 comprises the shim 19 and the assembling aid 8. The kit 32 can be used to retrofit existing tool bodies 2 with an assembling aid 8 according to the present disclosure. For the retrofit, no modification of the tool body 2 is needed.

Figures 13 to 16 illustrate further embodiments of an assembling aid 8 having an overall L-shape. In these embodiments of the present disclosure, the clamping sections 9 are shaped and designed as described with reference to figures 3 and 6. However, the mounting sections 10 comprises only the first part and are basically straight without any substantial bend.

Instead of being clamped between the shim 19 and the bottom surface 4 of the insert seat 3, the mounting sections 10 are received in a recess formed by an elongated hole 33 in the bottom surface 4 of the insert seat 3. The mounting sections 10 are secured in the holes 33 by glue.

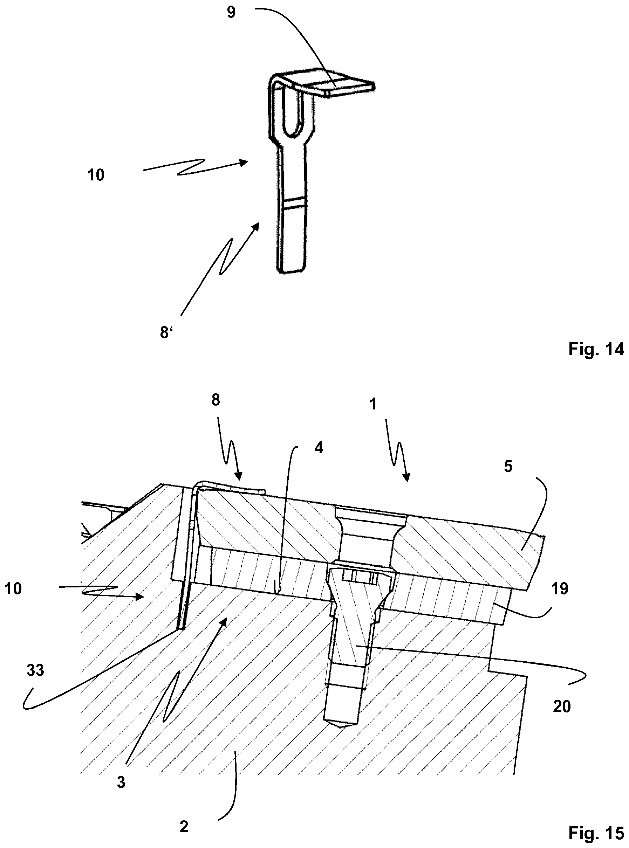

Also the L-shaped assembling aid 8 according to the embodiment of figures 13 and 16 is formed by bent wire of spring steel. The assembling aid 8 according to figures 14 and 15, is made of sheet metal of spring steel.

Figures 17 to 19 illustrate further embodiments of the assembling aid, wherein the assembling aid 8 is Z-shaped. The Z-shape of the assembling aid 8 is provided by first bending the clamping section 9 and the first part 11 of the mounting section 10 about 90° relative each other. Thereby, the clamping section 9 and the first part 11 of the mounting section 10 form an L-shape.

Furthermore, the first part 11 and the second part 12 of the mounting section 10 are bent relative each other to form an L-shape, too. The second part is bent in the opposite direction to the clamping section 9 so that the overall shape of the assembling aid 8 is Z-shaped.

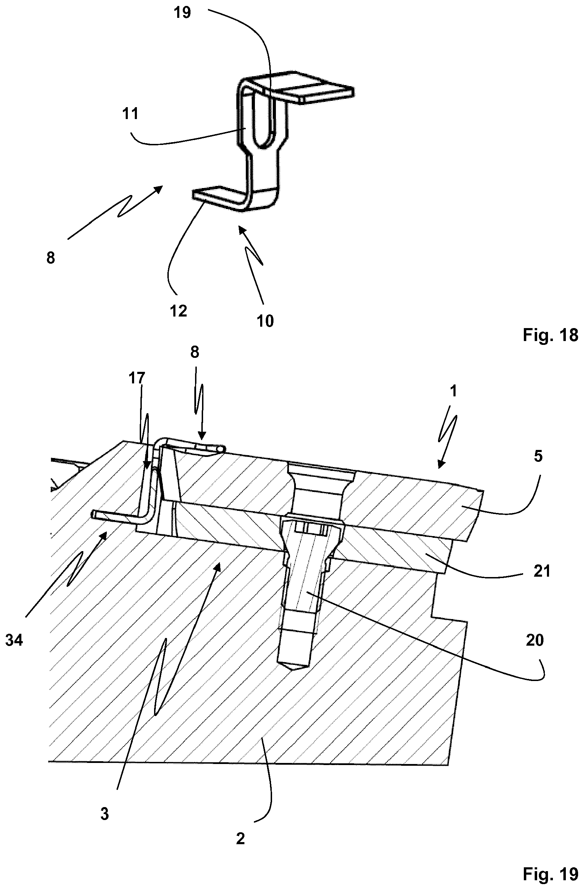

Consequently, a recess 34 is provided in the wall of the insert seat 3 in order to be able to mount either of the embodiments of figures 17 and 18 in the insert seat 3. The recess is formed in the corner area 17 between the side walls 13, 14 of the insert seat 3. In the embodiment shown in figure 19, the second part 12 of the mounting section 10 of the assembling aid 8 is press-fitted into the recess 34.

Finally, with reference to figures 20 and 21, an I-shaped embodiment of an assembling aid 8 is illustrated. The assembling aid 8 has a straight overall shape, wherein the clamping section 9 and the mounting section 10 together form the I-shape. The mounting section 10 is screwed to the tool body 2 adjacent to the insert seat 3 by two screws 38. The clamping section 9 has a convex curvature towards the bottom surface 22 of the insert seat 3 in order to provide the same functionality as has been described with reference to the embodiments of the assembling aid according to figures 3, 6, 13, 14, 17 and 18. However, it is apparent from figure 21 that in this embodiment the shim 19 and the cutting insert 5 should be selected such that their combined thickness is greater than the depth of the insert seat so that the top surface 6 of the cutting insert 5 projects beyond the upper surface 39 of the tool body 2. Thereby, the assembling aid 8 is able to provide its clamping functionality.

The disclosure as shown in the above description and in detail in the figures is only an example and is not considered to restrict the scope of protection as defined by the claims. Other embodiments are possible, which combine features, or groups of features, form different embodiments described herein.

In the claims, the word "comprising" does not exclude other elements or steps and the undefined article "a" does not exclude a plurality. The mere fact that some features have been claimed in different claims does not exclude their combination. Reference numbers in the claims are not considered to restrict the scope of protection.

### LIST OF REFRENCE NUMBERS

- 1: tool
- 2: tool body
- 3: insert seat
- 4: bottom surface of the insert seat
- 5: cutting insert
- 6: top surface of the cutting insert
- 7: bottom surface of the cutting insert
- 8: assembling aid
- 9: clamping section
- 10: mounting section
- 11: first part of the mounting section
- 12: second part of the mounting section
- 13: first side surface of the insert seat
- 14: second side surface of the insert seat
- 15, 16: side surfaces of the cutting insert
- 17: corner area
- 18: groove in the bottom surface of the insert seat
- 19: shim
- 20: screw
- 21: bottom surface of the shim
- 22: bottom surface of the groove
- 23: bottom surface of the clamping section
- 24: top surface of the shim
- 25: tip
- 26: relief in the assembling aid
- 27: clamp
- 28: hollow screw
- 29: inner threading
- 30: mounting screw
- 31: groove in the bottom surface of the shim
- 32: kit
- 33: elongated hole
- 34: recess
- 35: cutting corner
- 36: threaded hole
- 37: threaded hole
- 38: screw
- 39: upper surface
- 40: screw

## Claims

1. A tool (1) for chip removing machining comprising a tool body (2), the tool body (2) including at least one insert seat (3) for accommodating a cutting insert (5) having a top surface (6) and a bottom surface (7), wherein
- the tool body (2) is configured for securing the cutting insert (5) in the insert seat (3) by an attachment member (27, 30), and wherein
- the insert seat (3) has a bottom surface (4) and at least one side surface (13, 14),
**characterized in that** the tool (1) further comprises
at least one assembling aid (8), which is provided at least at one insert seat (3) and which includes a clamping section (9) and a mounting section (10), wherein
- the clamping section (9) extends above the bottom surface (4) of the insert seat (3) for, when the cutting insert (5) is accommodated in the insert seat (3), engaging the top surface (6) of the cutting insert (5),
- the clamping section (9) is biased towards the bottom surface (4) of the insert seat (3), and wherein
- the mounting section (10) is attached to the tool body (2).

2. The tool (1) according to the previous claim, wherein the clamping section (9) comprises an elastic material, and in a cross-section in a plane perpendicular to the bottom surface (4) of the insert seat (3) is convexly shaped towards the bottom surface (4).

3. The tool (1) according to anyone of the previous claims, wherein the assembling aid (8) comprises a bent metal wire or a bent elongated strip of sheet metal.

4. The tool (1) according to claim 3, wherein at least a first part of the mounting section (11) and the clamping section (9) are bent to an L-shape, wherein the first part of the mounting section (11) and the clamping section (9) define the legs of the L-shape.

5. The tool (1) according to claim 4, wherein the first part of the mounting section (11) and a second part of the mounting section (12) are bent to an L-shape, wherein the first part of the mounting section (11) and the second part of the mounting section (12) define the legs of the L-shape, so that the assembling aid (8) has a Z-shape or a U-shape.

6. The tool (1) according to anyone of the previous claims, wherein a first end of the mounting section (10) adjoins the clamping section (9), and wherein a second end of the mounting section (10) is fixed to the tool body (2).

7. The tool (1) according to claim 6, wherein the second end of the mounting section (10) is fixed in a complementary recess (33) formed in the tool body (2).

8. The tool (1) according to claim 5, wherein the tool (1) comprises a shim (19) mounted on the bottom surface (4) of the insert seat (3), wherein a groove (18) is provided in the bottom surface (4) of the insert seat (3), a part of the groove (18) extending below the shim (19), wherein the assembling aid (8) has a U-shape so that the second part (12) of the mounting section (10) is accommodated in the groove (18).

9. The tool (1) according to claim 5 or 8, wherein the tool (1) comprises a shim (19) mounted on the bottom surface (4) of the insert seat (3), wherein a groove (31) is provided in a bottom surface (21) of the shim (19), wherein the assembling aid (8) has a U-shape so that the second part (12) of the mounting section (10) is accommodated in the groove (31).

10. The tool (1) according to claim 8 or 9, wherein the second part of the mounting section (12) has a curved portion so that the second part of the mounting section (12) has a relaxed state and a clamped state, wherein the second part of the mounting section (12) is in the relaxed state when the second part of the mounting section (12) is received in the groove (18, 31) before the shim (19) is mounted, and in the clamped state when the second part of the mounting section (12) is received in the groove (18, 31) and the shim (19) is mounted, wherein, in the relaxed state at least a part of the curved portion projects from the groove (18, 31), and in the clamped state the curved portion is resiliently pressed into the groove (18, 31) by the shim (19).

11. The tool (1) according to anyone of the previous claims, wherein the insert seat (3) has a first side surface (13) and a second side surface (14) forming an angle therebetween for, when a cutting insert (5) having complementary side surfaces (15, 16) is mounted in the insert seat (3), supporting the complementary side surfaces (15, 16) of the cutting insert (5), the insert seat (3) includes a relief in the corner area (17), which is formed between the first side surface (13) and the second side surface (14) for, when a cutting insert (5) having complementary side surfaces (15, 16) is mounted in the insert seat (3), accommodating a cutting corner (35) of the cutting insert (5), and wherein at least a first part (11) of the mounting section (10) is received in the relief.

12. The tool (1) according to anyone of the previous claims, wherein a relief (26) for, when a cutting insert (5) is mounted in the insert seat (3), avoiding contact of the assembling aid (8) with a cutting edge of the cutting insert (5) is provided at least at the first part (11) of the mounting section (10).

13. The tool (1) according to anyone of the previous claims, wherein the tool body (2) comprises, at least at one of the insert seats (3), a receptacle (36, 37) for receiving a part of an attachment member (27, 30) for securing a cutting insert (5) in the insert seat (3).

14. The tool (1) according to anyone of the previous claims, wherein the tool further comprises a cutting insert (5), which cutting insert (5) is mounted in the insert seat (3) and has a thickness (D) in a direction perpendicular to the bottom surface (4) of the insert seat (3), and wherein a spacing between the clamping section (9) and a supporting surface (24) for the bottom surface (7) of the cutting insert (5), in a relaxed state of the clamping section (9), is smaller than the thickness (D) of the cutting insert (5).

15. A kit (32) for a tool (1) for chip removing machining, which tool (1) comprises a tool body (2) including at least one insert seat (3) for accommodating a cutting insert (5) having a top surface (6) and a bottom surface (7), wherein the kit is configured for being mounted in the insert seat, the kit (32) comprising
- a shim (19) suitable for being mounted on a bottom surface (4) of an insert seat (3), wherein the shim (19) has a bottom surface (21), a top surface (24) and a groove (31) provided in the bottom surface (24), and
- an assembling aid (8) comprising a clamping section (9) and a mounting section (10) which together form a U-shaped element having two legs and an interconnecting member, wherein
- the mounting section (10) has a first part (11) and a second part (12),
- the first part (11) of the mounting section and the clamping section (9) are bent so that the first part (11) forms the interconnecting member and the clamping section (9) forms one of the legs, and wherein
- the first part (11) of the mounting section (10) and the second part (12) of the mounting section (10) are bent so that the second part (12) forms the other one of the legs,
and wherein
- the second part (12) of the mounting section (10) is received in the groove (31) so that the clamping section (9) extends above the top surface (24) of the shim (19) for, when a cutting insert (5) is mounted in the insert seat (3), engaging a top surface (6) of the cutting insert (5), and
- the clamping section (9) is elastically deformable in a direction perpendicular to the top surface (24) of the shim (19) and away from the top surface (24) of the shim (19).
